# EUROPEAN PATENT APPLICATION

(11) **EP 4 421 157 A1**
(43) Date of publication of application: **28.08.2024**
(21) Application number: 23818212.5
(22) Date of filing: 19.10.2023
(51) Int. Cl.: C11D 10/04, C11D 17/04

(54) **HIGH-STABILITY ENVIRONMENTALLY-FRIENDLY LAUNDRY DETERGENT POD AND PREPARATION METHOD THEREFOR**

(30) Priority: 05.01.2023 CN 202310015244
(71) Applicant: Guangdong Youkai Technical Co., Ltd., Foshan 528200 (CN)
(72) Inventor: WANG, Quanwei, Foshan, Guangdong 528200 (CN); WU, Pingpging, Foshan, Guangdong 528200 (CN); ZHANG, Mingmei, Foshan, Guangdong 528200 (CN)
(74) Representative: Cueto, Sénida
(86) International application number: PCT/CN2023/125444
(87) International publication number: WO 2024/146214

(57) **Abstract**

Provided is a kind of environment-friendly laundry beads with high stability and a preparation method thereof. The kind of environment-friendly laundry beads with high stability includes the following components in percent by weight: a surfactant A, a surfactant B, an alkaline neutralizer, an auxiliary agent, and water; in the present invention, organic solvents can be completely replaced by different types of surfactant compositions from natural sources, and stable and uniform inner liquid of laundry beads can be prepared in combination with other surfactants from natural sources, the auxiliary agent, the alkaline neutralizers and water. Through compounding and synergistic effect of plant-derived anionic and nonionic surfactants, the final laundry bead products feature stability and uniformity, excellent detergent effect, high RCI, rich content of active substances, and environmental friendliness.

## Description

### TECHNICAL FIELD

The present invention belongs to the technical field of daily chemical detergents, and particularly relates to a kind of environment-friendly laundry beads with high stability and a preparation method thereof.

### BACKGROUND

With the development of the economy and the improvement of consumption level, detergents for fabrics are also constantly developed and changed in forms. After evolution from soap at the initial stage to laundry powder and then laundry detergents in recent years, a new laundry product called laundry beads was launched in China by P&G in 2015. As a new generation of fabric detergent products, the laundry beads feature concentration, convenience, strong detergency, easy rinsing, quantitative packaging, and the like, and an industry standard QB/T5658 was accordingly released in 2021. Pursuant to the industry standard QB/T5658 and requirements for production, storage and transportation, laundry beads should meet requirements for high-pressure resistance, detergency, solubility, and the like, which also explains great differences between the laundry beads and conventional laundry detergents.

For the laundry beads, consideration should be given to not only gelation in the process of compounding surfactants, but also the compatibility between inner liquid of the laundry beads and a water-soluble film, that is, the stability of the laundry beads. For general laundry beads, uniform and stable inner liquid of the laundry beads, but only limited to the compatibility with the water-soluble film, is generally prepared by compounding anions and non-ions in a reasonable way and adding more solvents, in order to solve the problem of gelation formed inside the laundry beads, therefore, more organic solvents need to be added to the inner liquid of the laundry beads to ensure that materials do not form gel and are perfectly compatible with the water-soluble film, having no impact on the stability of the beads. However, organic solvents required in the method above not only drive up the production costs, but also have no contribution to detergent effect. Solvents and surfactants from natural sources are very limited for natural laundry beads. Most anionic surfactants from natural sources contain a large amount of water, making them unsuitable for preparing the laundry beads with high renewable carbon index due to water content therein and unstable influence on the water-soluble film. In addition, materials prepared by stacking non-ionic surfactants from natural sources are prone to form gel or cause great changes in viscosity, making it difficult to seal a film and impossible to prepare stable laundry beads with a high renewable carbon index.

For example, the invention patent CN111040894A discloses a kind of mini laundry beads, but a formula disclosed therein contains more organic solvents and completely petrochemical-derived surfactants. The invention patent CN105861193B discloses a natural baking soda laundry detergent. In a formula disclosed therein, surfactants from natural sources are adopted, while more inorganic salts from non-natural sources are also introduced. The formula is dominated by an anionic system on the whole, thus being unsuitable for the laundry bead products. The invention patent CN109957470A discloses a natural amino acid surfactant concentrated type laundry detergent for infants and a preparation method thereof. Although a more natural laundry beads material can be prepared according to types and scope of raw materials defined in the patent, the material prepared thereby is of poor stability due to the lack of organic solvents, and long carbon-chain fatty alcohol surfactants used more therein. As can be seen from the above, many of the disclosed inventions do not show the features of laundry bead products made of materials from natural sources without organic solvents.

To sum up, for laundry beads having no organic solvents and made of materials from natural sources, major problem and challenge in the field are how to replace organic solvents and completely petrochemical-derived surfactants with surfactants made from natural carbon sources and having a detergent effect.

On this basis, the present invention provides a highly-stable and environmentally-friendly technical means of laundry beads to solve the deficiencies of the above technical solutions.

### SUMMARY

In order to overcome the defects in the prior art, the present invention provides a kind of environment-friendly laundry beads with high stability and a preparation method thereof to solve the problem of replacing organic solvents and completely petrochemical-derived surfactants with surfactants made from natural carbon sources and having a detergent effect.

One of embodiments with practical effect of the present invention provides a kind of environment-friendly laundry beads with high stability.

The kind of environment-friendly laundry beads with high stability includes the following components in percent by weight:

| | |
|---|---|
| A surfactant A | 10% ∼ 60% |
| A surfactant B | 10% ∼ 50% |
| An alkaline neutralizer | 0.01 % ∼ 10% |
| An auxiliary agent | 0.1% ∼ 10% |
| Water | Balance |

The surfactant B include a surfactant B1 and/or a surfactant B2; and
the surfactant B1 is represented by a general structural formula of a structural formula I and/or a structural formula II:

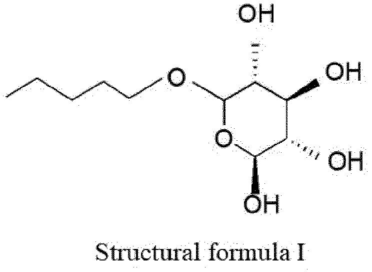

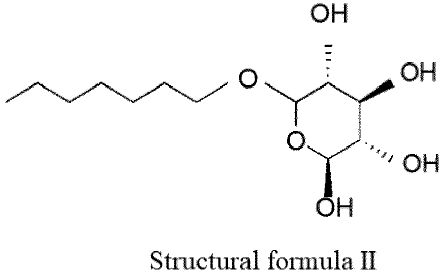

The surfactant B1 can be selected from alkyl polyglucoside AG series products of AKzoNobel Company.

Preferably, the surfactant B1 is AG6206 and AG6202.

The surfactant B2 is represented by a general structural formula of a structural formula III: 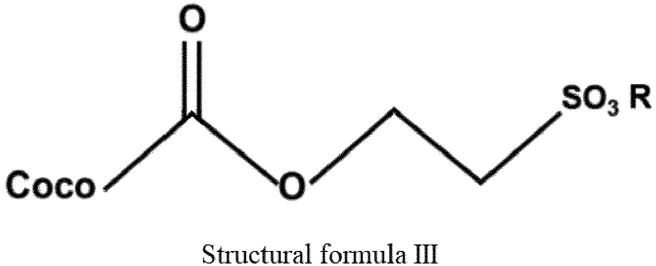 in the formula, R is selected from any one of sodium ions, potassium ions, and calcium ions. Preferably, the surfactant B2 can be selected from Elfan series products of AKzoNobel Company.

Preferably, the surfactant B2 is ElfanAT84C.

Further, the surfactant A is selected from one or more of fatty acids, cocoyl glycinate salt, sodium fatty acid methyl esters sulfonate, fatty alcohol alkoxylates and poly(ethylene glycol) monooleate.

Further, the fatty acids include saturated fatty acid and unsaturated fatty acid, and the saturated fatty acid is selected from decanoic acid, lauric acid, myristic acid, palmitic acid, stearic acid, and arachidic acid; and
the unsaturated fatty acid is selected from one or more of linoleic acid, linolenic acid and arachidonic acid.

Further, a structural formula of the cocoyl glycinate salt is as follows:

CₙH₂ₙ₊₁-CO-NH-CH2-COOR

where the fatty alcohol moiety thereof is selected from natural sources, n ranges from 6 to 18, and R is preferably Na⁺, K⁺.

Preferably, the cocoyl glycinate salt can be selected from the cocoyl glycinate salt series of Miwon Specialty Chemical Co., Ltd. or Sino Lion.

Further, the sodium fatty acid methyl esters sulfonate has a structural formula as follows: 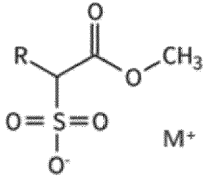 where R in the fatty acid moiety is selected from natural sources, M⁺ is preferably Na⁺, K⁺ and NH₄⁺, and a carbon number of the fatty acids ranges from 8 to 18.

Preferably, the sodium fatty acid methyl esters sulfonate can be selected from HC series of Petroliam Nasional Berhad, such as HC701, HC501.

Further, the fatty alcohol alkoxylates have a general formula as follows: 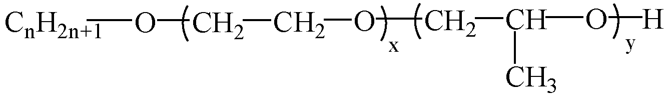 where the fatty alcohol moiety is selected from natural sources, and n ranges from 8 to 20; and x represents an average degree of ethoxylation, ranging from 1 to 16, and y represents a degree of ethoxylation, ranging from 0 to 16.

Preferably, the fatty alcohol alkoxylates can be selected from NEODOL series linear fatty alcohol alkoxylates products of Petroliam Nasional Berhad or SHELL PLC, and fatty alcohol alkoxypropoxylates can be selected from NS and GENAPOL series products of Clariant Chemicals or DOW Chemical Company.

Further, a general formula of the poly(ethylene glycol) monooleate is as follows: 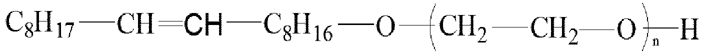 where the oleyl alcohol moiety is selected from natural sources, the epoxy ethane moiety is selected from natural sources, and n ranges from 8 to 16.

Preferably, the poly(ethylene glycol) monooleate can be selected from the ECOBRIJ series of poly(ethylene glycol) monooleate of CRODA International.

Preferably, the surfactant A is a selected from a combination consisting of fatty acids, ECOBrijO10, AEO7, GENAPOLEP2454, NS-669, cocoyl glycinate salt and HC501.

Further, a weight ratio of the surfactant A to the surfactant B is 1 ~ 5 : 1 ~ 5.

Further, a weight ratio of the surfactant B1 to the surfactant B2 is 1 ~ 10 : 1.

Further, the alkaline neutralizer is an inorganic alkaline neutralizer.

Preferably, the alkaline neutralizer accounts for 1% ~ 8% in percent by weight.

Further, cations of the inorganic alkaline neutralizer are selected from at least one of sodium ions, potassium ions, calcium ions and magnesium ions; and
preferably, anions of the inorganic alkaline neutralizer are selected from at least one of hydroxide, oxide, carbonate and bicarbonate.

Preferably, the inorganic alkaline neutralizer is sodium hydroxide.

Further, the auxiliary agent includes at least one of an enzyme preparation, a regulator, a chelating agent, a colorant, a color stabilizer and an essence.

The present invention also aims to provide a preparation method of the kind of environment-friendly laundry beads with high stability, including the following steps:
dissolving an alkaline neutralizer with deionized water at room temperature to obtain a mixture solution, adding a surfactant B1 and a surfactant B2 to the obtained mixture solution and stirring evenly, then adding a surfactant A to the evenly-stirred mixture solution and further stirring, adding an auxiliary agent until a temperature of the dissolved mixture solution drops below 50°C and stirring evenly until appearance of the mixture solution becomes uniform to obtain inner liquid of laundry beads, and coating the laundry beads with a PVA film to obtain finished products of the laundry beads.

The kind of environment-friendly laundry beads with high stability provided in the present invention has the following effects:
1. In the present invention, plant-derived non-ethoxylated sulfate-free anions compounded with short-carbon chain alkyl glycoside are used as the complex surfactant, so that good synergistic effect is produced, good affinity among components is formed, the dispersibility is improved, and a strong solubilization effect is generated. The laundry bead products prepared thereby have uniform appearance and good stability at high and low temperatures, such that the risk that the laundry bead products precipitate out of from the film caused by excessive sulfate content in the formula system is avoided. Surprisingly, the laundry beads in the present invention also greatly enhance detergency, with the P values up to 1.08 for carbon black stained cloth, up to 1.28 for protein stained cloth, and up to 1.17 for sebum stained cloth, proving a significant improvement over the prior art. Moreover, the laundry beads in the present invention feature a high moisture content, which is conducive to not only reducing the overall production cost of the products, but also dissolving part of the auxiliary agent and surfactants to achieve a stable formula system, thereby realizing the use effect of replacing petrochemical-derived solvents in the laundry bead products. The kind of environment-friendly laundry beads with high stability in the present invention has the advantages of high RCI, rich content of active substances, good stability, and excellent detergent effect, thereby having a desirable application prospect.
2. The present invention can also make the inner liquid of the laundry beads highly concentrated by replacing organic solvents with surfactant compositions. In addition, the surfactants used in the present invention are all from natural sources. Therefore, the laundry beads coated by the PVA film have the advantages of high RCI, rich content of active substances, good stability, excellent detergent effect, and the like.
3. In the present invention, organic solvents can be completely replaced by different types of surfactant compositions from natural sources, and the stable and uniform inner liquid of laundry beads can be prepared in combination with other surfactants from natural sources, the auxiliary agent, the alkaline neutralizer and water. Through compounding and synergistic effect of plant-derived anionic and nonionic surfactants, the final laundry bead products feature stability and uniformity, excellent detergent effect, high RCI, rich content of active substances, and environmental friendless.

### DETAILED DESCRIPTION OF EMBODIMENTS

In order to more clearly illustrate the technical solution in the present invention, the following embodiments are enumerated. Unless otherwise specified, raw materials, reactions and posttreatment method stated in the embodiments are all common commercially available raw materials and technical means known to those skilled in the art.

Natural sources in the present invention mean that sources of carbon-containing structure of carbon-containing raw materials used herein are natural. In the present invention, RCI is the abbreviation of renewable carbon index. The RCI of a raw material is a ratio of renewable carbon of the raw material structure to the total carbon of the same, and the RCI of a product is a ratio of renewable carbon of the product to the total organic carbon of the same.

In the embodiments of the present invention, a surfactant B1 can be selected from alkyl polyglucoside AG series products of AKzoNobel Company.

In the embodiments of the present invention, the surfactant B1 is preferably AG6206 and AG6202.

In the embodiments of the present invention, a surfactant B2 can be selected from Elfan series products of AKzoNobel Company.

In the embodiments of the present invention, the surfactant B2 is preferably Elfan AT84 C.

In the embodiments of the present invention, cocoyl glycinate salt can be selected from the cocoyl glycinate salt series of Miwon Specialty Chemical Co., Ltd. or Sino Lion.

In the embodiments of the present invention, sodium fatty acid methyl esters sulfonate can be selected from HC series of Petroliam Nasional Berhad, such as HC701, HC501.

In the embodiments of the present invention, fatty alcohol alkoxylates can be selected from NEODOL series linear fatty alcohol alkoxylates products of Petroliam Nasional Berhad or SHELL PLC, and fatty alcohol alkoxypropoxylates can be selected from NS and GENAPOL series products of Clariant Chemicals or DOW Chemical Company.

Components of the laundry beads and mass fractions thereof in Embodiments 1-3 are shown in Table 1.

**Table 1: Components of Laundry Beads and Mass Fractions Thereof in Embodiments 1-3**

| Detergent compositions | Embodiment 1 | Embodiment 2 | Embodiment 3 |
|---|---|---|---|
| Components | Percent by weight | | |
| Sodium hydroxide | 0.4 | 1 | 0.5 |
| Monoethanolamine | 0 | 0 | 0 |
| Sulfonic acid | 0 | 0 | 0 |
| Fatty acid | 6 | 10 | 7 |
| Glycerin | 0 | 0 | 0 |
| 1,2-propanediol | 0 | 0 | 0 |
| AEO9 | 0 | 0 | 0 |
| AEO7 | 7 | 10 | 5 |
| ECO Brij O10 | 0 | 5 | 0 |
| AES | 0 | 0 | 0 |
| GENAPOL EP 2454 | 10 | 15 | 5 |
| NS-669 | 20 | 5 | 18 |
| Cocoyl glycinate salt | 3 | 7.5 | 7 |
| HC501 | 6 | 3 | 8 |
| AG6202 | 21 | 0 | 12 |
| AG6206 | 0 | 10 | 12 |
| Elfan AT 84 C | 3 | 5 | 3 |
| XL-80 | 0 | 0 | 0 |
| Protease | 0.8 | 0.8 | 0.8 |
| Essence | 2 | 2 | 2 |
| Antiseptic | 0.1 | 0.1 | 0.1 |
| Water | Balance | Balance | Balance |

Preparation methods of the laundry beads in Embodiments 1-3 include the following steps:
the preparation method of the laundry beads was as follows: an alkaline neutralizer was dissolved with deionized water at room temperature to obtain a mixture solution, a surfactant B1 and a surfactant B2 were then added to the obtained mixture solution according to the above mass fractions, the mixture was stirred evenly, a surfactant A was added to the evenly-stirred mixture solution according to the above mass fractions, the mixture solution was further stirred until the surfactant A therein was dissolved, an auxiliary agent was added according to the above mass fractions until a temperature of the dissolved mixture solution dropped below 50 °C, the mixture solution was further stirred evenly until appearance thereof became uniform, inner liquid of the laundry beads was then obtained, and the inner liquid of the laundry beads was coated with a PVA film to obtain finished products of the laundry beads.

Comparative Embodiments 1-5 are set based on Embodiment 1, and components of the laundry beads and mass fractions thereof in Comparative Embodiments 1-5 are shown in Table 2.

**Table 2 Components of Laundry Beads and Mass Fractions Thereof in Comparative Embodiments 1-5**

| Detergent compositions | Comparativ e Embodimen t1 | Comparativ e Embodimen t2 | Comparativ e Embodimen t3 | Comparativ e Embodimen t4 | Comparativ e Embodimen t5 |
|---|---|---|---|---|---|
| Components | Percent by weight | | | | |
| Sodium hydroxide | 1.8 | 0 | 3.6 | 0 | 0 |
| Monoethanolamin e | 0 | 4 | 0 | 4 | 2 |
| Sulfonic acid | 10 | 14 | 18 | 15 | 8 |
| Fatty acid | 2 | 3 | 4 | 2 | 2 |
| Glycerin | 18 | 15 | 20 | 5 | 10 |
| 1,2-propanediol | 9 | 0 | 6 | 11 | 8 |
| AEO9 | 20 | 20 | 11 | 20 | 22 |
| AEO7 | 0 | 0 | 6 | 7 | 5 |
| ECO Brij O10 | 0 | 0 | 1 | 0 | 0 |
| AES | 8 | 1 | 6 | 3 | 3 |
| GENAPOL EP 2454 | 0 | 0 | 0 | 0 | 0 |
| NS-669 | 0 | 0 | 10 | 0 | 0 |
| Cocoyl glycinate salt | 0 | 0 | 0 | 0 | 0 |
| HC501 | 0 | 0 | 0 | 0 | 0 |
| AG6202 | 2 | 10 | 0 | 0 | 0 |
| AG6206 | 1 | 6 | 0 | 0 | 0 |
| Elfan AT 84 C | 1 | 0 | 7 | 0 | 0 |
| XL-80 | 18 | 5 | 2 | 30 | 37 |
| Protease | 0.2 | 0.2 | 0.2 | 0.2 | 0.2 |
| Essence | 2 | 2 | 2 | 2 | 2 |
| Antiseptic | 0.1 | 0.1 | 0.1 | 0.1 | 0.1 |
| Water | Balance | Balance | Balance | Balance | Balance |

Differences between Comparative Embodiments and Embodiments include: in Comparative Embodiment 1, an organic solvent and an excessive amount of inorganic base were added to reduce a content of the surfactant B; in Comparative Embodiment 2, a ratio of the surfactant B1 to the surfactant B2 was adjusted by adding an organic solvent; in Comparative Embodiment 3, an organic solvent was added but no surfactant B1 was added; in Comparative Embodiment 4, more organic solvent was added; and in Comparative Embodiment 5, more solubilizing raw materials were added.

### Test Embodiment 1

The laundry beads in Embodiments 1-3 and Comparative Embodiments 1-5 were subjected to stability test of storage appearance, with specific test methods and criteria as follows:
High-temperature stability: laundry beads in a specified package were placed in an environment at a temperature of 45±1°C for 1 month at the constant temperature, the laundry beads in the package were then placed at room temperature of 25±5°C, no obvious changes in appearance of the laundry beads were observed, neither damage nor leakage was identified, and stratification, turbidity, gel or precipitation of the inner liquid in the laundry beads was not observed, proving qualified high-temperature stability.

Low-temperature stability: laundry beads in a specified package were placed in an environment at a temperature of -5°C±2°C for 1 month, and were then taken out for immediate observation. No obvious changes in appearance of the laundry beads were observed, neither damage nor leakage was identified, and stratification, turbidity, gel or precipitation of the inner liquid in the laundry beads was not observed, proving qualified low-temperature stability.

Freeze-thaw cycle stability: laundry beads in a specified package were placed in an environment at a temperature of -15°C~ -20°C for 24 h and were then taken out, and the laundry beads in the specified package were placed at room temperature of 25°C±5°C for 24 h, which formed one cycle, the cycle was repeated for five times, and a state of the composition was observed each time. The experiment was a freeze-thaw cycle experiment. No obvious changes in appearance of the laundry beads were observed, neither damage nor leakage was identified, and stratification, turbidity, gel or precipitation of the inner liquid in the laundry beads was not observed, proving qualified low-temperature stability.

Normal-temperature stability: laundry beads in a specified package were placed at room temperature of (20°C ~ 30°C) for 1 month, no obvious changes in appearance of the laundry beads were observed, neither damage nor leakage was identified, and stratification, turbidity, gel or precipitation of the inner liquid in the laundry beads was not observed, proving qualified normal-temperature stability.

The stability and uniformity test results of the laundry beads in Embodiments and Comparative Embodiments of the present invention are shown in table 3. The test method of the formula RCI is: product formula RCI = Number of renewable carbons/ number of total organic carbons in the formula x 100%

**Table 3**

| | Embodiment 1 | Embodiment 2 | Embodiment 3 | Comparative Embodiment 1 | Comparative Embodiment 2 | Comparative Embodiment 3 | Comparative Embodiment 4 | Comparative Embodiment 5 |
|---|---|---|---|---|---|---|---|---|
| Conte nt of active substa nces (%) | 76.0 | 70.5 | 77.0 | 52.0 | 45.0 | 47.0 | 77.0 | 77.0 |
| Formul a RCI (RCI/ %) | 69.4 | 74.3 | 77.0 | 36.0 | 56.8 | 46.8 | 19.6 | 24.3 |
| Moistu re conten t (wt%) | 21.7 | 25.6 | 19.6 | 6.9 | 19.7 | 3.1 | 0.7 | 0.7 |
| Stabilit y | Qualifie d | Qualifie d | Qualifie d | Precipit ated | Soggy | Gel | Basicall y qualifie d | Basicall y qualifie d |

As can be seen from Table 3, the laundry beads in Embodiments 1-3 have a higher RCI (> 60%) due to the use of more raw materials from natural sources. The stability test results of Embodiments 1-3 show that the laundry beads in Embodiments 1-3 can ensure the stability of samples at each test temperature. It should be noted that, the inventor, in the experimental process, found that the laundry beads in Embodiments 1-3 had an overall moisture content greater than and equaling to 15 wt% due to the introduction of more free water in formulae thereof, however, a long-term weight loss rate of the laundry bead products coated with the PVA film is lower than and equals to 15 %, so that the weight stability requirements of laundry beads set forth in QB/T5658 are satisfied.

Samples prepared according to Comparative Embodiment 1 suffer a phenomenon of precipitation due to excessive addition of the inorganic base and insufficient addition of the surfactant B (including AG6202, AG6206 and ElfanAT 84C). Samples prepared according to Comparative Embodiment 2 are soggy and have poor pressure resistance due to a mismatch ratio of the surfactant B1 (including AG6202 and AG6206) to the surfactant B2 (ElfanAT84C). Samples prepared according to Comparative Embodiment 3 produce a gel phenomenon due to mismatching of problem of the surfactant components and failure to add the surfactant B1 (including AG6202 and AG6206). In contrast, laundry beads prepared according to Comparative Embodiments 4 and 5 are basically qualified, because they adopt commonly used surfactants and compound a certain amount of organic solvents to make the content of active agents of the beads reach a higher level, though overall clarity of the beads declines to some extent. Further, formulae thereof are subjected to a lower RCI due to the reasons related to types of selected surfactants.

### Test Embodiment 2

The laundry beads in Embodiments 1-3 and Comparative Embodiments 4-5 are subjected to a detergency test, with the test method as set forth in the *Determination of Detergency and Cycle of Washing Property for Laundry Detergents* (GB/T 13174-2008). In the detergency test, the addition amount of the samples is subject to the requirements set forth in QB/T5658 *Laundry Beads.* The results obtained are shown in Table 3, where R value represents a detergency value; and P value represents a detergency ratio. Generally, standard laundry detergent is taken as a reference sample, the detergency ratio is set to be 1.00, and the R value of other detergents is divided by the R value of the standard laundry detergent to obtain the P value. The higher the P value is, the better the detergency becomes. Since the laundry beads in Comparative Embodiments 1-2 are both unqualified in terms of the stability, and suffer obvious phenomena of being soggy, stratification, turbidity, gelation or turbidity, therefore, it is unnecessary to perform the detergency test. The test results are shown in Table 4.

**Table 4 Detergency Test Results of Laundry Beads in Embodiments 1-3 and Comparative Embodiments 4-5, and Standard Laundry Detergent**

| Sample information | Test concentration (g/L) | Type of test cloths | | | | | |
|---|---|---|---|---|---|---|---|
| | | Carbon black stained cloth | | Protein-stained cloth | | Sebum stained cloth | |
| | | R value | P Value | R value | P Value | R value | P Value |
| Standard laundry detergent | 2 | 10.51 | 1.00 | 2.05 | 1.00 | 7.57 | 1.00 |
| Embodiment 1 | 0.5 | 11.01 | 1.05 | 2.34 | 1.14 | 8.89 | 1.17 |
| Embodiment 2 | 0.5 | 11.08 | 1.05 | 2.36 | 1.15 | 7.75 | 1.02 |
| Embodiment 3 | 0.5 | 11.39 | 1.08 | 2.62 | 1.28 | 8.3 | 1.10 |
| Comparative Embodiment 4 | 0.5 | 10.51 | 1.00 | 2.32 | 1.13 | 6.81 | 1.02 |
| Comparative Embodiment 5 | 0.5 | 10.62 | 1.01 | 2.28 | 1.11 | 6.66 | 1.00 |

As can be seen from Table 4, the detergency effects of the laundry beads in the embodiments on carbon black, protein and sebum stained cloths are significantly better than those of the standard laundry detergent, and the laundry beads in Comparative Embodiments 4-5. Specifically, the RCR of the laundry beads in Comparative Embodiments 4-5 is relatively low, resulting in a lower clarity, but the content of overall surfactants thereof is relatively high, so that the laundry beads therein have strong detergency. In sum, the laundry beads according to the embodiments of the present invention have strong detergent power, and their overall detergency effects are obviously better than those of the standard laundry detergent and those in the comparative embodiments.

For those skilled in the art, it is apparent that the present invention is not limited to the details of the above exemplary embodiments, and the present invention may be implemented in other specific forms without departing from the spirit or basic features of the present invention. Therefore, the embodiments should be regarded as illustrative and non-restrictive no matter from which point of view. The scope of the present invention is defined by the appended claims rather than the above specification, and therefore, it is intended that all changes which fall within the meaning and scope of equivalency of the claims are embraced in the present invention.

In addition, it should be understood that although the description is described according to implementations, each implementation does not include only one independent technical solution, the description is for clarity only, and those skilled in the art should take the description as a whole, the technical solutions in the various embodiments may be appropriately combined to form other implementations understandable by those skilled in the art.

## Claims

1. A kind of environment-friendly laundry beads with high stability, comprising the following components in percent by weight:
| | |
|---|---|
| A surfactant A | 10% ∼ 60% |
| A surfactant B | 10% ∼ 50% |
| An alkaline neutralizer | 0.01% ∼ 10% |
| An auxiliary agent | 0.1% ∼ 10% |
| Water | Balance |
the surfactant B comprises a surfactant B1 and/or a surfactant B2;
the surfactant B1 is represented by a general structural formula of a structural formula I and/or a structural formula II: 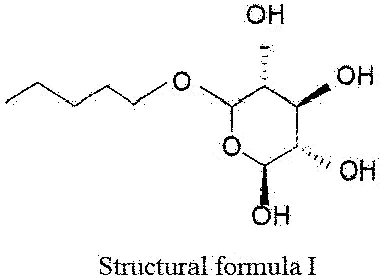 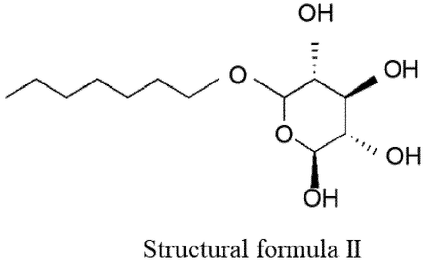
the surfactant B2 is represented by a general structural formula of a structural formula III: 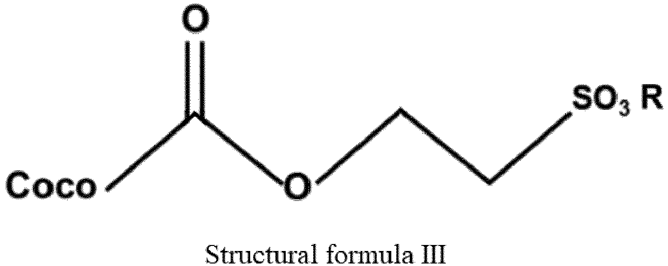
in the formula, R is selected from any one of sodium ions, potassium ions, and calcium ions.

2. The kind of environment-friendly laundry beads with high stability according to claim 1, wherein
the surfactant A is selected from one or more of fatty acids, cocoyl glycinate salt, sodium fatty acid methyl esters sulfonate, fatty alcohol alkoxylates and poly(ethylene glycol) monooleate.

3. The kind of environment-friendly laundry beads with high stability according to claim 1, wherein
a weight ratio of the surfactant A to the surfactant B is 1 ~ 5 : 1 ~ 5.

4. The kind of environment-friendly laundry beads with high stability according to claim 1, wherein
a weight ratio of the surfactant B1 to the surfactant B2 is 1 ~ 10 : 1.

5. The kind of environment-friendly laundry beads with high stability according to claim 1, wherein
the alkaline neutralizer is an inorganic alkaline neutralizer.

6. The kind of environment-friendly laundry beads with high stability according to claim 5, wherein
cations of the inorganic alkaline neutralizer are selected from at least one of sodium ions, potassium ions, calcium ions, and magnesium ions; and
anions of the inorganic alkaline neutralizer are selected from at least one of hydroxide, oxide, carbonate and bicarbonate.

7. The kind of environment-friendly laundry beads with high stability according to claim 1, wherein
the auxiliary agent comprises at least one of an enzyme preparation, a regulator, a chelating agent, a colorant, a color stabilizer and an essence.

8. The kind of environment-friendly laundry beads with high stability according to claim 1, wherein
the moisture content is greater than or equals to 15 wt%.

9. A preparation method of the kind of environment-friendly laundry beads with high stability according to claim 1, wherein the method comprises the following steps:
dissolving an alkaline neutralizer with deionized water at room temperature to obtain a mixture solution, adding a surfactant B1 and a surfactant B2 to the obtained mixture solution and stirring evenly, then adding a surfactant A to the evenly-stirred mixture solution and further stirring, adding an auxiliary agent and stirring evenly, and coating the laundry beads with a PVA film to obtain finished products of the laundry beads.

10. The preparation method of the kind of environment-friendly laundry beads with high stability according to claim 9, wherein the temperature needs to be lowered below 50°C before the auxiliary agent is added.
